# EUROPEAN PATENT APPLICATION

(11) **EP 4 806 626 A1**
(43) Date of publication of application: **16.09.2026**
(21) Application number: 24888579.0
(22) Date of filing: 28.10.2024
(51) Int. Cl.: B30B 11/18, B22F 3/18, B22F 3/093, H01M 4/139

(54) **POWDER ROLLING UNIT**

(30) Priority: 08.11.2023 JP 2023191133
(71) Applicant: Panasonic Energy Co., Ltd., Moriguchi-shi, Osaka 570-8511 (JP)
(72) Inventor: TAKAYAMA, Yosuke, Kadoma-shi, Osaka 571-0057 (JP); UEDA, Takashi, Kadoma-shi, Osaka 571-0057 (JP); MAEDA, Satoru, Kadoma-shi, Osaka 571-0057 (JP); TANI, Hitoshi, Kadoma-shi, Osaka 571-0057 (JP)
(74) Representative: Eisenführ Speiser
(86) International application number: PCT/JP2024/038293
(87) International publication number: WO 2025/100282

(57) **Abstract**

A powder rolling unit includes: a rolling roll (2a) and/or a rolling roll (2b) that form a rolled sheet (5) by rolling a powder material (4); a hopper (1) that stores the powder material (4) above the rolling roll (2a) and/or the rolling roll (2b), and; and a squeegee (3) that is provided above the rolling roll (2a) and/or the rolling roll (2b) and parallel to an axis direction of the rolling roll (2a) and/or the rolling roll (2b), and is vibrated at a predetermined frequency. The following expression is satisfied: 22 ≤ (a distance (L1a or L1b) between the squeegee (3) and the rolling roll (2a or 2b)) / a particle size (D50) ≤ 58, when the distance between the squeegee (3) and the rolling roll (2a or 2b) is divided by the particle size (D50) of a powder that is included in the powder material (4) to be rolled.

## Description

### [Technical Field]

The present disclosure relates to a powder rolling unit.

### [Background Art]

In recent years, attention has been given to a dry film forming method in which a film is formed directly from a powder because it is possible to form a powder layer that has a higher level of performance and a smaller environment load, as compared with a wet film forming method in which a powder is dispersed in a solvent and then applied. With the dry film forming method, it is possible to obtain a powder layer in which material damage to the powder caused by the solvent is prevented while maintaining a high level of performance, and energy consummation can be significantly reduced, without having to dry the solvent.

With a conventional dry film forming method that uses a powder, for example, in order to produce a rolled sheet such as an electrode sheet from the powder that contains an electrode active material, the powder is subjected to rolling processing using a powder rolling device.

For example, Patent Literature (PTL) 1 discloses a powder rolling device that includes: a rolling portion that forms a rolled sheet by rolling a powder; a hopper that is provided above the rolling portion and stores the powder; a plurality of feeders that are provided in a width direction of the rolled sheet and supply the powder to the hopper; and a controller that controls a level of the powder in the width direction in the hopper such that a thickness of the rolled sheet in the width direction is within a predetermined range.

### [Citation List]

### [Patent Literature]

[PTL 1]
PTL 1: Japanese Patent No. 5772427

### [Summary of Invention]

### [Technical Problem]

However, with PTL 1, the powder flows naturally into a nip region of the rolling portion, which makes the mass per unit area of the powder in the flowing direction unstable, and causes variation in the mass per unit area of the rolled sheet obtained through the rolling portion.

To address this, it is an object of the present disclosure to provide a powder rolling unit in which it is possible to suppress clogging caused by the powder material in the nip region and reduce variation in the mass per unit area of the rolled sheet.

### [Solution to Problem]

A powder rolling unit according to one aspect of the present disclosure includes: a rolling roll that forms a rolled sheet by rolling a powder material; a hopper that stores the powder material above the rolling roll, and; and a squeegee that is provided above the rolling roll and parallel to an axis direction of the rolling roll, and is vibrated at a predetermined frequency, wherein the following expression is satisfied: 22 ≤ (a distance between the squeegee and the rolling roll) / a particle size (D50) ≤ 58, when the distance between the squeegee and the rolling roll is divided by the particle size (D50) of a powder that is included in the powder material to be rolled.

### [Advantageous Effects of Invention]

With the powder rolling unit according to the present disclosure, it is possible to suppress clogging caused by the powder material in the nip region and reduce variation in the mass per unit area of the rolled sheet.

### [Brief Description of Drawings]

[FIG. 1]

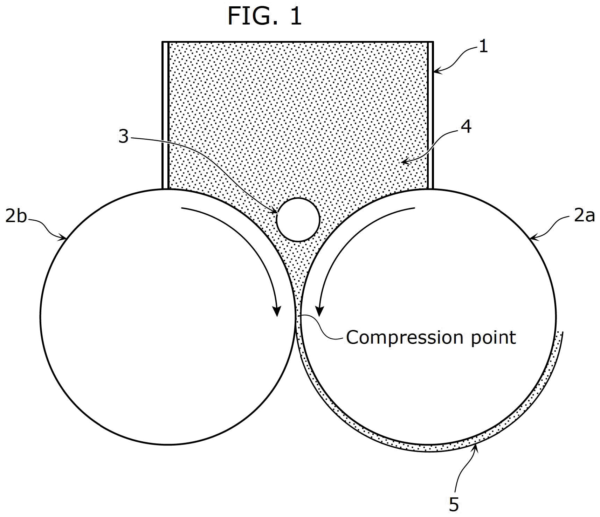

   FIG. 1 is a schematic diagram of a powder rolling unit according to an embodiment of the present disclosure as viewed from a side of the powder rolling unit.
[FIG. 2]

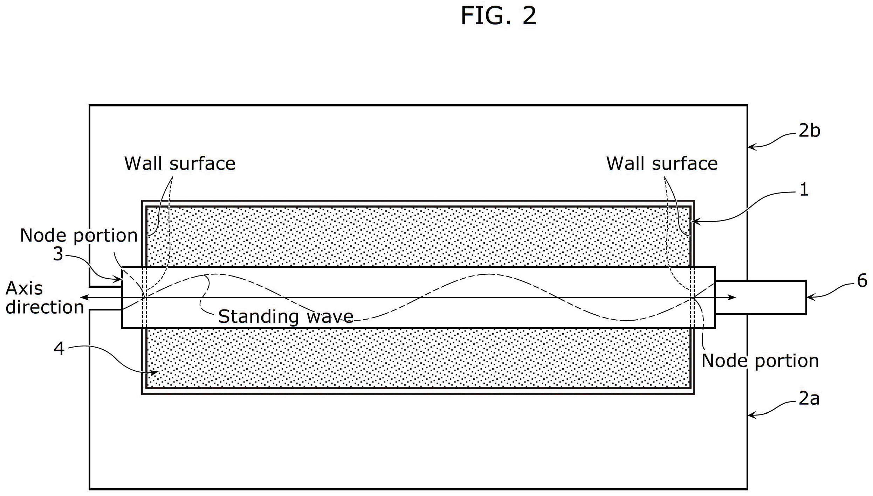

   FIG. 2 is a schematic diagram of the powder rolling unit according to the embodiment of the present disclosure as viewed from above.
[FIG. 3A]

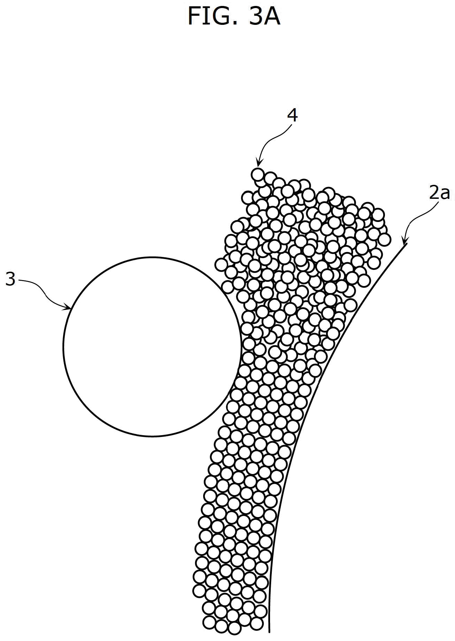

   FIG. 3A is a schematic diagram showing a state in which powder material particles are supplied uniformly to a nip region by a squeegee according to the embodiment of the present disclosure.
[FIG. 3B]

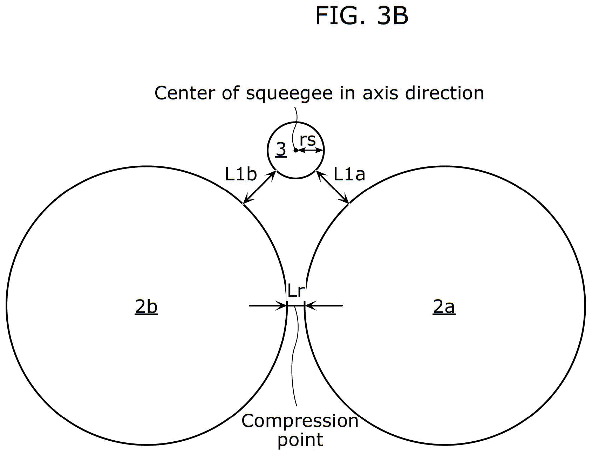

   FIG. 3B is a schematic diagram showing a positional relationship between a pair of rolling rolls and the squeegee in the powder rolling unit according to the embodiment of the present disclosure as viewed from a side of the powder rolling unit.
[FIG. 4]

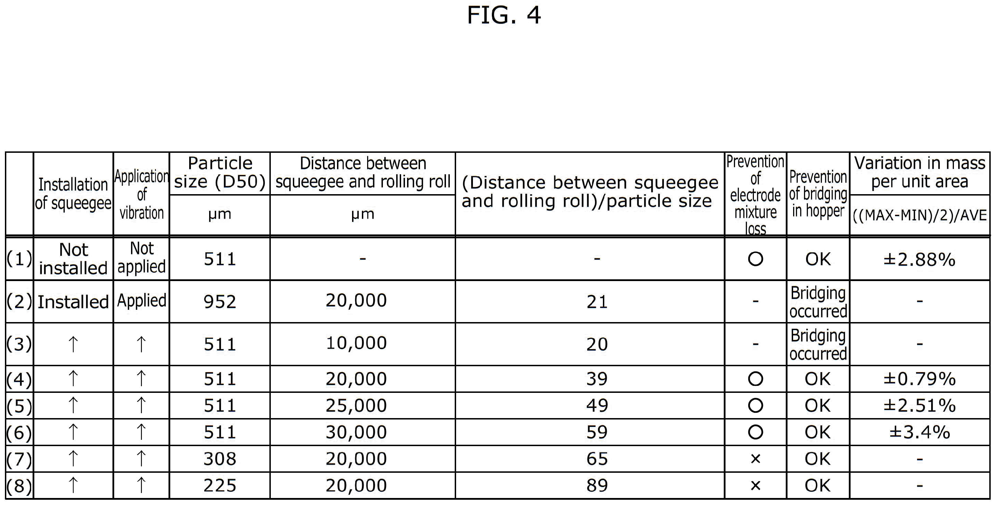

   FIG. 4 is a table showing whether squeegee is provided, whether squeegee is vibrated, particle size (D50), distance between squeegee and rolling roll, (distance between squeegee and rolling roll) / particle size (D50), the occurrence of electrode mixture loss, the occurrence of bridging in hopper, and variation in mass per unit area.

### [Description of Embodiments]

The embodiments described below show generic or specific examples of the present disclosure. The numerical values, shapes, materials, structural elements, the arrangement and connection of the structural elements, and the like shown in the following embodiments are merely examples, and therefore are not intended to limit the scope of the present disclosure. Also, among the structural elements described in the following embodiments, structural elements not recited in any one of the independent claims are described as arbitrary structural elements.

Also, the diagrams are schematic representations in which emphasis, omission, and scaling adjustment are applied as appropriate to clearly show the present disclosure, and thus are not necessarily true to scale. Accordingly, the shape, the positional relationship, and the scale may be different from the actual shape, the actual positional relationship, and the actual scale. Also, in the diagrams, structural elements that are substantially the same are given the same reference numerals, and a redundant description may be omitted or simplified.

Also, in the embodiments described below, the expressions such as "thickness direction" and "cylindrical shape" are used. For example, the expressions such as "thickness direction" and "cylindrical shape" mean not only completely "thickness direction" and "cylindrical shape", but also substantially "thickness direction" and "cylindrical shape", or in other words, the expressions encompass the case where there is a deviation of about several percent. Also, the expressions such as "thickness direction" and "cylindrical shape" mean "thickness direction" and "cylindrical shape" within a range where the advantageous effects of the present disclosure can be obtained. The same applies to other expressions that use the words such as "direction" and "shape".

### (Overview)

A powder rolling unit according to an aspect of the present disclosure will be described below.

The powder rolling unit according to the aspect of the present disclosure applies vibration to a powder that is provided near a pair of rolling rolls to improve fluidity of the powder in a nip region, and thereby suppresses clogging caused by the powder, and enables a uniform mass per unit area of a rolled sheet obtained.

The powder rolling unit includes a hopper that functions as a material feeder, a pair of rolling rolls, and a squeegee. The squeegee is vibrated by ultrasound, and transmits the vibration to the powder to impart fluidity to the powder. The number of squeegees provided in the hopper may be one or more.

Hereinafter, an embodiment of the present disclosure will be described with reference to the drawings.

### (Embodiment)

The present embodiment will be described below with reference to FIGS. 1 to 4.

FIG. 1 is schematic diagram of a powder rolling unit according to an embodiment of the present disclosure as viewed from a side of the powder rolling unit. In FIG. 1, hopper 1, a pair of rolling rolls 2a and 2b, squeegee 3, powder material 4, and rolled sheet 5 obtained are shown.

FIG. 2 is a schematic diagram of the powder rolling unit according to the embodiment of the present disclosure as viewed from above. In FIG. 2, the axis direction of squeegee 3 is indicated by an arrow, and the standing wave at which squeegee 3 is vibrated is indicated by a dash-double dotted line.

FIG. 3A is a schematic diagram showing a state in which particles that constitute powder material 4 are supplied uniformly to a nip region by squeegee 3 according to the embodiment of the present disclosure.

FIG. 3B is a schematic diagram showing a positional relationship between the pair of rolling rolls 2a and 2b and squeegee 3 in the powder rolling unit according to the embodiment of the present disclosure as viewed from a side of the powder rolling unit.

FIG. 4 is a table showing whether squeegee 3 is provided, whether squeegee 3 is vibrated, particle size (D50), distance L1a or L1b between squeegee 3 and rolling roll 2a or 2b, (distance L1a or L1b between squeegee 3 and rolling roll 2a or 2b) / particle size (D50), the occurrence of electrode mixture loss, the occurrence of bridging in hopper 1, and variation in mass per unit area.

### [Powder Rolling Unit]

### (Functional Configuration of Powder Rolling Unit)

As shown in FIGS. 1 and 2, the powder rolling unit includes: hopper 1 that is provided above the pair of rolling rolls 2a and 2b, and functions to store powder material 4 composed of a powder and supply powder material 4 to the pair of rolling rolls 2a and 2b; and squeegee 3 that is provided in hopper 1.

Squeegee 3 is provided in hopper 1, and vibrated at a predetermined frequency by vibrator 6. Squeegee 3 that is vibrated by vibrator 6 can apply the vibration to powder material 4 that is stored in hopper 1. With this configuration, squeegee 3 can constantly supply powder material 4 to rolling rolls 2a and 2b without causing clogging of powder material 4 in the space between the pair of rolling rolls 2a and 2b. In the present embodiment, the pair of rolling rolls 2a and 2b may also be referred to simply as "rolling rolls 2a and 2b".

Powder material 4 constantly supplied to rolling rolls 2a and 2b is rolled at a compression point at which the distance between the surface of rolling roll 2a and the surface of rolling roll 2b is shortest. Accordingly, rolled sheet 5 made of powder material 4 rolled by rolling rolls 2a and 2b at the compression point can be obtained.

Squeegee 3 is provided above rolling rolls 2a and 2b and parallel to the axis direction of each of rolling rolls 2a and 2b. The reason for this is that, if squeegee 3 is not provided parallel to rolling rolls 2a and 2b, the distance from one end portion of squeegee 3 to the compression point is different from the distance from another end portion of squeegee 3 to the compression point, which causes a difference caused by variation between the mass per unit area of rolled sheet 5 obtained in one end portion of rolled sheet 5 and the mass per unit area of rolled sheet 5 obtained in another end portion of rolled sheet 5.

Also, it is desirable that squeegee 3 is provided parallel to rolling rolls 2a and 2b even as viewed in the moving direction of rolled sheet 5. The reason for this is that, if squeegee 3 is not provided parallel to rolling rolls 2a and 2b, the distance from the center of squeegee 3 to the compression point is different from the distance from an end portion of squeegee 3 to the compression point, which causes a difference caused by variation between the mass per unit area of rolled sheet 5 obtained at the center portion of rolled sheet 5 obtained and the mass per unit area of rolled sheet 5 obtained at an end portion of rolled sheet 5. In the present embodiment, the term "parallel" means not only completely parallel, but also substantially parallel, or in other words, encompasses the case where there is a deviation of about several percent.

Also, squeegee 3 is vibrated at a predetermined frequency. Specifically, squeegee 3 is vibrated at a frequency of 2 kHz or more and 300 kHz or less. Squeegee 3 can be efficiently vibrated using a vibrator that vibrates at a frequency of 2 kHz or more and 300 kHz or less as vibrator 6. For example, in the case where a powder that has a particle size of 100 µm or more and 700 µm or less is used, in order to impart fluidity to the powder, a high-frequency vibration at a frequency of 2 kHz or more and 300 kHz or less is required. The reason for this is that, if a low-frequency vibration at a frequency of less than 2 kHz is used, insufficient vibration frequency is applied to the powder, and sufficient fluidity cannot be imparted to the powder, and if a high-frequency vibration at a frequency of greater than 300 kHz is used, vibration attenuation when vibration is transmitted to the powder, and thus sufficient fluidity cannot be imparted to the powder.

As shown in FIGS. 1 and 3A, squeegee 3 that is vibrated at a frequency within the above-described range is in contact with powder material 4, and thus when squeegee 3 is vibrated, the vibration of squeegee 3 is transmitted to powder material 4. As a result of powder material 4 being vibrated, friction resistance in powder material 4 (between particles) is reduced to improve the fluidity of powder material 4. That is, as a result of squeegee 3 being vibrated, the fluidity of powder material 4 is improved, and powder material 4 can be constantly supplied to the compression point.

For example, powder material 4 that is provided above rolling rolls 2a and 2b moves in the rotation direction of rolling rolls 2a and 2b. At this time, the powder that is included in powder material 4 is present in a disordered manner, without being aligned. As a result of powder material 4 composed of the powder that is present in a disordered manner passing through the space between squeegee 3 and rolling rolls 2a and 2b provided with a gap therebetween, the powder that is included in powder material 4 can be aligned before reaching the compression point. As a result of the powder that is included in powder material 4 being aligned, it is possible to control the loading rate for loading powder material 4 supplied to the compression point, reduce electrode mixture loss, and reduce variation in the mass per unit area of rolled sheet 5 obtained. The reason for this is that, for example, if squeegee 3 is not vibrated, the vibration from squeegee 3 is not applied to powder material 4, the powder is merely present in a disordered manner, and it is therefore not possible to align the powder. Accordingly, the fluidity of powder material 4 is not improved, and clogging caused by powder material 4 may occur when powder material 4 passes through squeegee 3. As a result, even when clogging caused by powder material 4 does not occur, the loading rate for loading powder material 4 cannot be controlled, which makes it difficult to reduce the variation in the mass per unit area of rolled sheet 5 obtained.

Squeegee 3 only needs to be vibrated in at least one of the thickness direction of rolled sheet 5 obtained, the width direction of rolled sheet 5 obtained, or the moving direction of rolled sheet 5 obtained. When focus is given to the movement of a single particle that constitutes powder material 4, the single particle is surrounded by adjacent particles in all directions while being in contact with the adjacent particles, and thus, as a result of the single particle vibrating in each direction, it is possible to reduce the friction coefficient between the single particle and the particles in contact with the single particle in the direction. For this reason, the fluidity of powder material 4 can be improved. When squeegee 3 is vibrated in two or more directions, the fluidity of powder material 4 can be further improved.

### (Distance between Squeegee 3 and Rolling Rolls 2a and 2b)

Next, the distance between squeegee 3 and rolling rolls 2a and 2b will be described.

As shown in FIGS. 1 and 3B, squeegee 3 has the function of improving the fluidity of powder material 4 in the nip region between rolling rolls 2a and 2b. Accordingly, it is desirable to provide squeegee 3 at a position as close as possible to rolling rolls 2a and 2b. In the present embodiment, at least a portion of squeegee 3 may be provided between rolling rolls 2a and 2b so as not to come into contact with rolling rolls 2a and 2b. That is, at least a portion of squeegee 3 may be provided in the nip region. Also, it is desirable to provide squeegee 3 at a position above rolling rolls 2a and 2b so as to overlap both rolling rolls 2a and 2b. The reason for this is that, if squeegee 3 is provided at a position too far away from rolling roll 2a or 2b, distance L1a or distance L1b will be large, which causes powder material 4 whose powder is insufficiently aligned to be supplied to the nip region, and causes variation in the mass per unit area of rolled sheet 5. As used herein, the term "nip region" refers to a region between rolling rolls 2a and 2b.

Specifically, distance L1a between squeegee 3 and rolling roll 2a that is the shortest distance between the center of rolling roll 2a in the axis direction and the center of squeegee 3 in the axis direction when they are connected by a straight line, distance L1b between squeegee 3 and rolling roll 2b that is the shortest distance between the center of rolling roll 2b in the axis direction and the center of squeegee 3 in the axis direction when they are connected by a straight line, and the distance at the compression point (compression distance) that is the shortest distance between rolling rolls 2a and 2b, or in other words, shortest distance Lr between rolling rolls 2a and 2b at the compression point will be defined.

When distance L1a between squeegee 3 and rolling roll 2a or distance L1b between squeegee 3 and rolling roll 2b is divided by the particle size (D50) of the powder that is included in powder material 4 to be rolled, the following expression is satisfied:
22 ≤ (distance L1a or L1b between squeegee 3 and rolling roll 2a or 2b) / particle size (D50) ≤ 58.

It is desirable that at least one of distance L1a or distance L1b is greater than or equal to distance Lr and less than or equal to Lr + 50 mm. The reason for this is that, when at least one of distance L1a or distance L1b is greater than Lr + 50 mm, it is difficult for the powder aligned by vibration to maintain its aligned state to the nip region, which causes variation in the mass per unit area of rolled sheet 5 obtained, and on the other hand, when at least one of distance L1a or distance L1b is less than Lr, the amount of powder material 4 supplied to the nip region is reduced, and it is therefore not possible to obtain intended rolled sheet 5. Note that distance L1a and distance L1b do not necessarily need to be equal.

For the reason described above, squeegee 3 only needs to be provided at a position with respect to rolling roll 2a within a range in which either Lr ≤ L1a ≤ Lr + 50 mm or Lr ≤ L1a < Lr + 50 mm is satisfied. Also, squeegee 3 only needs to be provided at a position with respect to rolling roll 2b within a range in which either Lr ≤ L1b ≤ Lr + 50 mm or Lr ≤ L1b < Lr + 50 mm is satisfied.

Also, it is desirable that the position of squeegee 3 in the thickness direction of rolled sheet 5 obtained is a position where the distance between the center of squeegee 3 and the center between rolling rolls 2a and 2b, or in other words, the distance between the center of squeegee 3 and the compression point is less than or equal to Lr/2 + radius rs of squeegee 3. In other words, it is desirable to provide squeegee 3 at a position above rolling rolls 2a and 2b so as to overlap both rolling rolls 2a and 2b. Outside this range, distance L1a or distance L1b will be large, which causes powder material 4 whose powder is insufficiently aligned to be supplied to the nip region, and causes variation in the mass per unit area of rolled sheet 5.

If shortest distance Lr between rolling rolls 2a and 2b is too long with respect to the particle size (D50) of the powder, powder material 4 falls out from between rolling rolls 2a and 2b, and intended rolled sheet 5 cannot be formed. If, on the other hand, shortest distance Lr is too short, the load on powder material 4 will be too high, and intended rolled sheet 5c annot be formed. For this reason, in the present embodiment, shortest distance Lr is set according to the particle size (D50) of the powder.

### (Material and Shape of Squeegee 3)

Next, the material and the shape of squeegee 3 will be described.

Squeegee 3 is made of, for example, a metal material. By using a metal material to make squeegee 3, a high frequency propagates through squeegee 3 without being significantly attenuated. A high frequency with a short wavelength has the property of being easily attenuated, and a metal material has the property of easily transmitting waves. Accordingly, squeegee 3 made using a metal material can suppress high frequency attenuation. For this reason, in entire squeegee 3, the vibration state becomes uniform, and thus variation in the mass per unit area of rolled sheet 5 in the width direction is reduced.

As the metal material, for example, stainless steel, titanium, aluminum, copper, iron, nickel, or the like is used. In particular, from the viewpoint of high corrosion resistance and rust resistance, it is preferable to use stainless steel or titanium as the metal material. It is more preferable to use titanium as the metal material because titanium is light in weight and likely to vibrate at ultrasound frequencies.

Squeegee 3 may be made of a material other than the metal material. For example, squeegee 3 may be made of a resin material or a ceramic material, or may be made of a composite material that contains two or more materials selected from a metal material, a resin material, and a ceramic material.

Also, it is desirable that the shape of squeegee 3 is a cylindrical shape for the purpose of uniformly applying vibration to powder material 4 that is provided in the surroundings. For example, the shape of squeegee 3 is an elongated cylindrical shape that extends in a predetermined direction. In this case, the diameter of squeegee 3 is desirably 2 mm or more and 30 mm or less. The reason for this is that, if the diameter of squeegee 3 is greater than 30 mm, squeegee 3 is unlikely to vibrate, which makes it difficult to impart sufficient fluidity to powder material 4, and if the diameter of squeegee 3 is less than 2 mm, squeegee 3 will be too thin and thus deformed, which makes it difficult to impart sufficient fluidity to powder material 4.

### (Amplitude of Squeegee 3)

Next, the amplitude of squeegee 3 will be described.

Regarding the amplitude direction of squeegee 3, it is desirable that squeegee 3 is vibrated in at least one of the width direction of rolled sheet 5 obtained, the thickness direction of rolled sheet 5 obtained, or the length direction of rolled sheet 5 obtained. As long as squeegee 3 is vibrated in two or more of the above-described three directions, the fluidity of powder material 4 can be further improved. In particular, in the case where squeegee 3 has a cylindrical shape, in order to efficiently transmit vibration to powder material 4 that surrounds squeegee 3, it is desirable that squeegee 3 is vibrated in at least one of the thickness direction of rolled sheet 5 or the moving direction of rolled sheet 5. In this case, the fluidity of powder material 4 can be further improved.

Also, it is desirable that the amplitude amount of squeegee 3 is 0.1 µm or more in at least one of the above-described three directions. The reason for this is that, if the amplitude amount of squeegee 3 is less than 0.1 µm, it is difficult to impart sufficient fluidity to powder material 4. From the viewpoint of improving the fluidity of powder material 4, because the greater the amplitude amount of squeegee 3, the more desirable it is, the amplitude of squeegee 3 may be amplified to the extent that it is practically amplifiable.

Also, as indicated by the dash-double dotted line in FIG. 2, squeegee 3 is usually vibrated by a standing wave. That is, when squeegee 3 is vibrated, in squeegee 3, there are antinode portions of vibration where the amplitude is high and node portions of vibration where the amplitude is low. In order to transmit the vibration of squeegee 3 to powder material 4 without being attenuated, it is desirable to provide wall surfaces of hopper 1 shown in FIG. 2 in the node portions of vibration. That is, it is desirable to control vibrator 6 so as to adjust the frequency of squeegee 3 according to the width of hopper 1 that is parallel to the axis direction of squeegee 3.

### (Frequency at which Squeegee 3 is Vibrated)

Next, the frequency at which squeegee 3 is vibrated will be described.

As shown in FIGS. 1 and 2, squeegee 3 is vibrated by vibrator 6 that is connected to squeegee 3. At this time, squeegee 3 is naturally vibrated at a frequency of 2 kHz or more and 300 kHz or less by vibrator 6. That is, squeegee 3 is vibrated at a high frequency close to the ultrasonic band. Specifically, the vibration of squeegee 3 is transmitted to powder material 4 when powder material 4 that has been supplied to hopper 1 passes through the space between squeegee 3 and rolling rolls 2a and 2b (between rolling roll 2a and squeegee 3 and between rolling roll 2b and squeegee 3), and the fluidity of powder material 4 is thereby increased. For this reason, clogging caused by powder material 4 when powder material 4 passes through the space between squeegee 3 and rolling rolls 2a and 2b is suppressed.

The reason for this is that, as a result of squeegee 3 being vibrated at a high frequency, powder material 4 that is in contact with squeegee 3 is unlikely to receive friction resistance caused by the powder pressure. Accordingly, as a result of the fluidity of powder material 4 that is in contact with squeegee 3 being increased, retention and aggregation of powder material 4 are suppressed.

Also, regarding powder material 4 that is in the vicinity of squeegee 3 as well, as a result of squeegee 3 being vibrated, the friction force between adjacent powder particles is reduced to increase the fluidity, which suppresses the aggregation of powder material 4.

The fluidity of powder material 4 tends to be higher as the vibration frequency of squeegee 3 is higher. For this reason, by vibrating squeegee 3 at a frequency of 2 kHz or more that is a frequency in a high frequency region near the ultrasonic band, the fluidity of powder material 4 can be increased to a sufficiently high level. However, the vibration tends to attenuate more as the frequency is higher. Accordingly, the vibration of squeegee 3 is unlikely to be transmitted through powder material 4. However, at a frequency of 300 kHz or less, the fluidity of powder material 4 can be increased to a sufficiently high level.

With the configuration described above, even when powder material 4 that has a particle size (D50) of 700 µm or less and a low level of fluidity is used, as a result of squeegee 3 being vibrated, powder material 4 can pass through the space between squeegee 3 and rolling rolls 2a and 2b without powder material 4 remaining and aggregating. As a result, the thickness of powder material 4 and the loading rate for loading powder material 4 can be adjusted. Accordingly, rolled sheet 5 that has a small variation in the mass per unit area can be obtained.

### (Vibrator 6)

Next, vibrator 6 will be described.

Squeegee 3 is equipped with vibrator 6. As a result of vibrator 6 vibrating, the vibration is transmitted to squeegee 3 to cause squeegee 3 to vibrate.

Vibrator 6 includes a plurality of piezoelectric bodies and electrodes that are provided on end faces of each of the plurality of piezoelectric bodies. In vibrator 6, each of the plurality of piezoelectric bodies is sandwiched between the electrodes. That is, vibrator 6 has a sandwich structure in which each piezoelectric body is sandwiched between the electrodes. The number of piezoelectric bodies is, for example, an even number such as two, four, or six. The electrodes are, for example, thin metal plates made of copper, phosphor bronze, or the like.

The piezoelectric bodies may be made of a piezoelectric ceramic such as, for example, lead zirconate titanate (PbTiO₃-PbZrO₃, commonly called PZT) or barium titanate (BaTiO₃). Alternatively, the piezoelectric bodies may be made of a piezoelectric single crystal such as, for example, quartz or LiNbO₃.

In the case where the piezoelectric bodies are made of a piezoelectric ceramic (for example, PZT), each piezoelectric body has a thickness of about 2 mm or more and 5mm or less.

Also, it is preferable that vibrator 6 is a Langevin-type vibrator that has a sandwich structure in which a piezoelectric body is sandwiched between a front metal plate and a backing metal plate, and the entire length is set to half the wavelength because it provides high output and is also highly reliable.

Specifically, a Langevin-type vibrator has a structure in which a front metal plate and a backing metal plate that are provided on opposite sides of a piezoelectric body made of PZT or the like are fastened with a bolt. The front metal plate and the backing metal plate are made of duralumin. The bolt is made of steel, a titanium alloy, or the like. The front metal plate has, at its center, a screw hole for connecting. Squeegee 3 is inserted into the screw hole and fastened, and thereby vibrator 6 and squeegee 3 are firmly and tightly connected. With this configuration, the vibration generated by vibrator 6 can be transmitted to squeegee 3. At this time, a horn that amplifies the amplitude or a horn that disperses the vibration direction may be connected between vibrator 6 and squeegee 3.

Vibrator 6 is a vibrator that excites waves. Positive and negative charges are applied respectively to thin metal plates that are provided on opposite end faces of each piezoelectric body included in vibrator 6. The electrical energy is thereby converted into mechanical energy. As a result of the electrical signal being converted into the mechanical vibration, vibrator 6 vibrates at a high frequency. The vibration propagates to squeegee 3.

In the case where vibrator 6 is an elongated vibrator, regarding the polarization direction of each piezoelectric body made of PZT or the like, it is preferable that vibrator 6 is aligned with the longitudinal direction of each piezoelectric body such that vibrator 6 is configured to expand and contract in the longitudinal direction of the piezoelectric body. In this case, the vibration direction of vibrator 6 matches the longitudinal direction of vibrator 6, and thus the vibration direction of generated vibration can be easily controlled.

### (Rolling Rolls 2a and 2b)

Next rolling rolls 2a and 2b will be described.

Rolling rolls 2a and 2b form rolled sheet 5 by rolling powder material 4 that is supplied from hopper 1. Specifically, powder material 4 whose fluidity is improved by the vibration of squeegee 3 is supplied to the nip region between rolling rolls 2a and 2b, and then compressed and stretched. At this time, the shortest distance between rolling rolls 2a and 2b that is the compression point corresponds to the thickness of rolled sheet 5. The distance between rolling rolls 2a and 2b is determined based on the thickness of rolled sheet 5. It is desirable that shortest distance Lr between rolling rolls 2a and 2b is 2 mm or less. The reason for this is that, if powder material 4 with a particle size of 700 µm or less is used and the distance between rolling rolls 2a and 2b is greater than 2 mm, the compression force for compressing powder material 4 will be insufficient, which prevents powder material 4 from being sufficiently rolled, and it may not be possible to obtain intended rolled sheet 5.

Rolled sheet 5 obtained may be further passed through the space between rolling rolls 2a and 2b a plurality of times. Also, rolled sheet 5 may be stretched one or more times using other rolls whose roll diameter, circumferential speed, gap, and the like are different from those of rolling rolls 2a and 2b.

Also, rolling rolls 2a and 2b have a predetermined diameter of, for example, 100 mm or more and 200 mm or less. In this case, powder material 4 may be hot-pressed using rolling rolls 2a and 2b by heating rolling rolls 2a and 2b, or rolled sheet 5 may be hot-pressed using rolling rolls 2a and 2b by heating rolling rolls 2a and 2b.

### (Surface Roughness of Rolling Rolls 2a and 2b)

Next, the surface roughness of rolling rolls 2a and 2b will be described.

Rolling roll 2a that is one of rolling rolls 2a and 2b has a roughness (surface roughness) greater than that of rolling roll 2b that is an other one of rolling rolls 2a and 2b. In other words, the surface roughness of rolling roll 2a is greater than the surface roughness of rolling roll 2b.

By configuring rolling roll 2a to have a surface roughness greater than that of rolling roll 2b, rolled sheet 5 obtained as a result of powder material 4 being supplied to the nip region and then compressed and stretched is easily discharged from the space between rolling rolls 2a and 2b, with rolled sheet 5 sticking to the surface of rolling roll 2a. With this configuration, rolling rolls 2a and 2b can convey rolled sheet 5 that has passed through the space between rolling rolls 2a and 2b to the next rolls.

For example, rolling roll 2a has a surface roughness A1 of 0.5 µm, and rolling roll 2b has a surface roughness B1 of 0.2 µm. Surface roughness A1 of rolling roll 2a is 2.5 times surface roughness B1 of rolling roll 2b. If, for example, the surface roughness of rolling roll 2a is slightly higher than the surface roughness of rolling roll 2b, rolled sheet 5 that has a low strength may tear off from rolling roll 2a. In this case, it is not possible to discharge rolled sheet 5 that has passed through the space between rolling rolls 2a and 2b to the next rolls that is provided at an intended position. For this reason, it is desirable that surface roughness A1 is higher than surface roughness B1 such that rolled sheet 5 can be conveyed to the next rolls, with rolled sheet 5 sticking to rolling roll 2a. Surface roughness A1 and surface roughness B1 may be set as appropriate according to the particle size of the powder, the material used to form the surfaces of rolling rolls 2a and 2b, the rotation speed of rolling rolls 2a and 2b, and the like. For this reason, surface roughness A1 / surface roughness B1 does not necessarily need to be 2.5.

### (Rotation Speed of Rolling Rolls 2a and 2b)

Next, the rotation speed of rolling rolls 2a and 2b will be described.

Rolling roll 2a that is one of rolling rolls 2a and 2b has a rotation speed higher than that of rolling roll 2b that is an other one of rolling rolls 2a and 2b. Also, rolling roll 2a has a surface roughness higher than that of rolling roll 2b. Accordingly, the rotation speed of rolling roll 2a is set to be higher than that of rolling roll 2b such that rolling roll 2a can easily wind up rolled sheet 5. That is, by setting the rotation speed of rolling roll 2a to be higher than that of rolling roll 2b, rolled sheet 5 obtained as a result of powder material 4 being supplied to the nip region and then compressed and stretched is easily discharged from the space between rolling rolls 2a and 2b, with rolled sheet 5 sticking to the surface of rolling roll 2a. With this configuration, rolling rolls 2a and 2b can convey rolled sheet 5 that has passed through the space between rolling rolls 2a and 2b to the next rolls.

For example, rolling roll 2a has a rotation speed A2 of 26 m/min, and rolling roll 2b has a rotation speed B2 of 6.5 m/min. Rotation speed A2 of rolling roll 2a is four times rotation speed B2 of rolling roll 2a. Rotation speed A2 and rotation speed B2 may be set as appropriate according to the particle size of the powder, the material used to form the surfaces of rolling rolls 2a and 2b, surface roughness A1 and B1, and the like. For this reason, rotation speed A2 / rotation speed B2 does not necessarily need to be 4.

### (Relationship between Distance L1a or L1b and Particle Size (D50))

Next, the reason that 22 ≤ (distance L1a or L1b) / particle size (D50) ≤ 58 is derived based on the relationship between (i) distance L1a or L1b between squeegee 3 and rolling roll 2a or 2b and (ii) particle size (D50) will be described with reference to FIG. 4.

Here, the occurrence of electrode mixture loss, the occurrence of bridging in hopper 1, and variation in mass per unit area are examined using a powder rolling unit whose structural elements are configured as follows.

Specifically, the structural elements of the powder rolling unit are configured by setting surface roughness A1 of rolling roll 2a to 0.5 µm, surface roughness B1 of rolling roll 2b to 0.2 µm, rotation speed A2 of rolling roll 2a to 26 m/min, rotation speed B2 of rolling roll 2b to 6.5 m/min, the ratio of rotation speed A2 of rolling roll 2a relative to the circumferential speed ratio of rolling roll 2a relative to rotation speed B2 to 4, shortest distance Lr between rolling rolls 2a and 2b to 455 µm, the width of hopper 1 to 240 mm, and the diameter of squeegee 3 to 4 mm.

Whether squeegee 3 is provided, whether squeegee 3 is vibrated by ultrasound, particle size (D50), distance L1a or L1b, distance L1a or L1b / particle size (D50), the occurrence of electrode mixture loss, the occurrence of bridging in hopper 1, variation in mass per unit area in this case are shown. The variation in mass per unit area is calculated by subtracting the minimum value from the maximum value, dividing the result by 2, and then averaging the results.

First, in item (1) in which the powder rolling unit not equipped with squeegee 3 is used, and powder material 4 whose powder has a particle size of 511 µm is used, the occurrence of electrode mixture loss was prevented, the occurrence of bridging in hopper 1 was prevented, and the variation in mass per unit area was ±2.88%.

Next, in item (2) in which the powder rolling unit equipped with squeegee 3 is used, squeegee 3 is vibrated at a frequency of 2 kHz or more and 300 kHz or less, powder material 4 whose powder has a particle size of 952 µm is used, and distances L1a and L1b are set to 20000 µm, distance L1a or L1b / particle size (D50) was 21, and a bridge was formed in hopper 1. Accordingly, rolled sheet 5 was not output from between rolling rolls 2a and 2b.

Next, in item (3) in which the powder rolling unit equipped with squeegee 3 is used, squeegee 3 is vibrated at a frequency of 2 kHz or more and 300 kHz or less, powder material 4 whose powder has a particle size of 511 µm is used, and distances L1a and L1b are set to 10000 µm, distance L1a or L1b / particle size (D50) was 20, and a bridge was formed in hopper 1. Accordingly, the rolled sheet was not output from between rolling rolls 2a and 2b.

Next, in item (4) in which the powder rolling unit equipped with squeegee 3 is used, squeegee 3 is vibrated at a frequency of 2 kHz or more and 300 kHz or less, powder material 4 whose powder has a particle size of 511 µm is used, and distances L1a and L1b are set to 20000 µm, distance L1a or L1b / particle size (D50) was 39, the occurrence of electrode mixture loss was prevented, the occurrence of bridging in hopper 1 was prevented, and the variation in mass per unit area was ±0.79%.

Next, in item (5) in which the powder rolling unit equipped with squeegee 3 is used, squeegee 3 is vibrated at a frequency of 2 kHz or more and 300 kHz or less, powder material 4 whose powder has a particle size of 511 µm is used, distances L1a and L1b are set to 25000 µm, distance L1a or L1b / particle size (D50) was 49, the occurrence of electrode mixture loss was prevented, the occurrence of bridging in hopper 1 was prevented, and the variation in mass per unit area was ±2.51%.

Next, in item (6) in which the powder rolling unit equipped with squeegee 3 is used, squeegee 3 is vibrated at a frequency of 2 kHz or more and 300 kHz or less, powder material 4 whose powder has a particle size of 511 µm is used, and distances L1a and L1b are set to 30000 µm, distance L1a or L1b / particle size (D50) was 59, the occurrence of electrode mixture loss was prevented, the occurrence of bridging in hopper 1 was prevented, and the variation in mass per unit area was ±3.4%.

Next, in item (7) in which the powder rolling unit equipped with squeegee 3 is used, squeegee 3 is vibrated at a frequency of 2 kHz or more and 300 kHz or less, powder material 4 whose powder has a particle size of 308 µm is used, and distances L1a and L1b are set to 20000 µm, distance L1a or L1b / particle size (D50) was 65, electrode mixture loss occurred, and the occurrence of bridging in hopper 1 was prevented.

Next, in item (8) in which the powder rolling unit equipped with squeegee 3 is used, squeegee 3 is vibrated at a frequency of 2 kHz or more and 300 kHz or less, powder material 4 whose powder has a particle size of 225 µm is used, and distances L1a and L1b are set to 20000 µm, distance L1a or L1b / particle size (D50) was 89, electrode mixture loss occurred, and the occurrence of bridging in hopper 1 was prevented.

From the results of items (1) to (8) described above, it was found that bridging in hopper 1 occurs when distance L1a or L1b / particle size (D50) is less than or equal to 21, and electrode mixture loss occurs when distance L1a or L1b / particle size (D50) is greater than or equal to 65. Out of items (1) to (8), in items (4) to (6), the occurrence of electrode mixture loss and the occurrence of bridging in hopper 1 were prevented. In item (6), the variation in mass per unit area was ±3.4%, which is higher than the variation in mass per unit area obtained in item (1). It was found from this that the configurations of items (4) and (5) are desirable in which the occurrence of electrode mixture loss was prevented, the occurrence of bridging in hopper 1 was prevented, and the variation in mass per unit area was small.

In item (3), distance L1a or L1b / particle size (D50) = 20 should be excluded because a bridge is formed in hopper 1. Also, in item (2), distance L1a or L1b / particle size (D50) = 21 should also be excluded.

For this reason, the lower limit value of distance L1a or L1b / particle size (D50) is set to 22.

Also, in order to exclude item (6), distance L1a or L1b / particle size (D50) = 59 in item (6) should also be excluded.

For this reason, the upper limit value of distance L1a or L1b / particle size (D50) is set to 58.

### (Method for Supplying Powder Material 4)

Next, a method for supplying powder material 4 to the powder rolling unit will be described.

As shown in FIGS. 1 and 2, powder material 4 is supplied to hopper 1. Hopper 1 functions to temporarily store powder material 4, and constantly supply powder material 4 to the nip region between rolling rolls 2a and 2b. The method for supplying powder material 4 to hopper 1 may be intermittently supplying powder material 4 to the nip region between rolling rolls 2a and 2b, or continuously supplying powder material 4 to the nip region between rolling rolls 2a and 2b using a known constant quantity feeding device such as a screw feeder or a vibration feeder. From the viewpoint of constantly maintaining the powder pressure that is generated between squeegee 3 and rolling rolls 2a and 2b, it is desirable to continuously supply powder material 4 to the nip region between rolling rolls 2a and 2b using a constant quantity feeding device such as a screw feeder or a vibration feeder. With this configuration, the powder pressure that is generated between squeegee 3 and rolling rolls 2a and 2b can be constantly maintained, and it is possible to obtain rolled sheet 5 that has a small variation in the mass per unit area.

### (Particle Size of Powder)

Next, the particle size of the powder that is included in powder material 4 will be described.

The powder that is included in powder material 4 preferably has a particle size (D50) of, for example, 100 µm or more and 700 µm or less. In this case, the fluidity of powder material 4 tends to be lower as the particle size (D50) of the powder is smaller, but the fluidity of powder material 4 is improved due to the vibration of squeegee 3. Accordingly, retention and aggregation of powder material 4 are suppressed, and the powder is arranged in an aligned manner. Accordingly, powder material 4 is of high quality with a small variation in the mass per unit area.

As used herein, the term "particle size (D50)" refers to a volume-based median diameter that is calculated from measured values obtained in a particle size distribution using a laser diffraction/scattering method or the like. The particle size (D50) can be measured using a commercially available laser analysis/scattering particle size distribution measurement device.

As used herein, the term "mass per unit area" refers to a value that indicates the amount of powder per unit area in weight, and is expressed in a unit of, for example, g/cm².

Also, the powder may be composed only of one type of powder or two or more types of powders. Also, powder material 4 may be a granulated powder obtained by aggregating a predetermined amount of powder into larger particles. It is sufficient that powder material 4 is a powder substance. That is, there is no particular limitation on the raw material of powder material 4, the composition of powder material 4, and the particle shape of powder material 4. In the present embodiment, powder material 4 is a group of particles that contains a positive electrode active material for a lithium ion secondary battery.

### [Production Method]

Next, a production method for producing rolled sheet 5 that has a small variation in the mass per unit area that uses the powder rolling unit will be described.

The production method includes: supplying powder material 4 to hopper 1 (a powder supplying step); causing powder material 4 to pass through the space between squeegee 3 and rolling rolls 2a and 2b to supply powder material 4 to the nip region, with its powder being aligned (a powder aligning step); and rolling powder material 4 using rolling rolls 2a and 2b to obtain rolled sheet 5 (a powder rolling step).

First, powder material 4 is produced. There is no particular limitation on the raw material of powder material 4. For example, a group of particles that contains an active material may be used. In the case where a group of particles that containsa n active material is used, powder material 4 is produced by adding appropriate additives (for example, a binder, a conductive material, and the like) to the active material and mixing them. As the mixing method, for example, a mortar, a ball mill, a mixer, or the like may be used. In particular, it is preferable to use a powder mixing method in which a solvent or the like is not used because no material degradation occurs.

Next, in the powder supplying step, powder material 4 is supplied to hopper 1. Powder material 4 may be intermittently supplied to hopper 1, or may be continuously supplied to hopper 1 using a known constant quantity feeding device such as a screw feeder or a vibration feeder.

In the powder aligning step, powder material 4 whose powder has been aligned is supplied to the nip region using squeegee 3. That is, in the powder aligning step, the amount of powder material 4 supplied to the nip region and the degree of pulverization of powder material 4 are controlled by squeegee 3. At this time, squeegee 3 is vibrated at a frequency of 2 kHz or more and 300 kHz or less. Squeegee 3 resonates (naturally vibrates) with a sinusoidal standing wave. Squeegee 3 is vibrated in at least one of the thickness direction of rolled sheet 5 obtained, the width direction of rolled sheet 5 obtained, or the length direction of rolled sheet 5 obtained. For this reason, the fluidity of powder material 4 can be increased. Also, in the case where squeegee 3 is vibrated in a plurality of directions, the fluidity of powder material 4 can be further increased.

Next, in the powder rolling step, powder material 4 is roll-pressed by rolling rolls 2a and 2b. Powder material 4 whose powder has been aligned by the vibration of squeegee 3 is compressed through the nip region, with the amount of powder material 4 supplied being controlled by the vibration of squeegee 3. Through this, rolled sheet 5 made of compressed powder material 4 whose powder has been aligned by squeegee 3 is formed.

As described above, in the method for producing rolled sheet 5, by performing the powder supplying step, the powder aligning step, and the powder rolling step in this order, rolled sheet 5 made of powder material 4 is formed. Rolled sheet 5 produced in manner described above can be used in an energy device. For example, in the case where a group of particles that contains an active material is used as powder material 4, an electrode sheet for an energy device can be produced.

The produced energy device can include an electrode sheet that has a small variation in the mass per unit area, formed by directly applying powder material 4 that has imparted fluidity. Accordingly, because the method for producing rolled sheet 5 includes the step of directly applying powder material 4 without using the step of dispersing powder material 4 in a solvent or the like and then applying and drying powder material 4, degradation of the material caused by the solvent can be prevented, and a higher capacity energy device can be achieved. Also, the additional cost of using a solvent and drying the solvent can be reduced. Furthermore,w ith the production method,h igh energy consumption in the drying step can be reduced, and the environmental load can be reduced. On the other hand, in the case where rolled sheet 5 has a highly uniform mass per unit area, the quality as an electrode in an energy device can be increased, and it is therefore possible to produce a high capacity energy device with good quality at low cost.

### (Rolled Sheet 5)

Next rolled sheet 5 formed using the powder rolling unit will be described.

Rolled sheet 5 according to the present embodiment is used in, for example, an energy device. Rolled sheet 5 formed has a thickness of 30 µm or more. Also, rolled sheet 5 contains a powder that is made of at least one particle material. Also, the concentration of solvent contained in the powder layer is 50 ppm or less. Also, the variation in the mass per unit area of the powder layer is small.

It is thereby possible to form rolled sheet 5 that has a small variation in the mass per unit area and in which degradation caused by a solvent is suppressed. Also, the step of drying a solvent is not required, and thus the energy consumption required to dry a solvent can be reduced. Accordingly, the environmental load can be suppressed, and the increase in the production cost can be suppressed. Therefore, by using the powder layer in an energy device, the capacity and the quality of the energy device can be increased, and also a low environmental load and a low cost reduction can be achieved.

Rolled sheet 5 according to the present embodiment can be used in, for example, a lithium ion secondary battery.

Hereinafter, an example will be described in detail in which rolled sheet 5 is used in a lithium ion secondary battery.

Rolled sheet 5 is used in combination with, for example, a known current collector in an electrode (a positive electrode or a negative electrode) of a lithium ion secondary battery. The electrode includes the current collector and rolled sheet 5.

The electrode may further include an additional layer between the current collector and rolled sheet 5. The additional layer may be, for example, a connection layer made of a conductive carbon material or the like, or the like.

Rolled sheet 5 has a thickness of 30 µm or more. There is no particular limitation on the upper limit value of the thickness of rolled sheet 5. The upper limit value of the thickness of rolled sheet 5 is, for example, 2000 µm or less.

Also, rolled sheet 5 contains powder material 4 that is composed of at least one particle material.

The concentration of solvent contained in rolled sheet 5 is 50 ppm or less. That is, the powder layer is substantially free of solvent. As used herein, the expression "substantially free of solvent" encompasses the case where no solvent is contained and the case where a solvent is unavoidably contained as an impurity or the like at a concentration of 50 ppm or less. The concentration of solvent is weight-based concentration. In a region on the surface of rolled sheet 5, the variation in the mass per unit area of the powder layer is, for example, 8% or less.

The mass per unit area is measured using, for example, the following method.

First, rolled sheet 5 is punched into a circular or polygonal shape of a predetermined size, and then the weight of punched rolled sheet 5 is measured. The mass per unit area can be obtained by dividing the measured weight by the area of the punched circular or polygonal shape.

Also, the variation in the mass per unit area can be measured using, for example, the following method.

First, a region on the surface of the powder layer as viewed in a plan view is selected. The region may be a center region on the surface of the powder layer or a region that includes an end portion of the powder layer. Then, within the area of the selected region, for example, the sheet is punched into a circular or polygonal shape of a predetermined size at five or more locations, and the mass per unit area is measured using the above-described method. From the viewpoint of increasing the accuracy of the variation measurement, the number of locations at which the sheet is punched may be nine or more. The variation in the mass per unit area is calculated by dividing a difference (specifically, an absolute value of a difference) between an average mass per unit area of all punched locations and the mass per unit area of one of the punched locations whose mass per unit area has a large difference from the average mass per unit area by the average mass per unit area. That is, the expression "the variation in the mass per unit area is 8% or less" means that the difference with respect to the average mass per unit area is 8% or less of the average mass per unit area at any punched location.

Also, rolled sheet 5 is produced through, for example, the step of applying a powder material substantially free of solvent. Accordingly, rolled sheet 5 substantially free of solvent can be formed. As a result, rolled sheet 5 will have no damage caused by solvent. Accordingly, because degradation of rolled sheet 5 is suppressed, and the variation in the mass per unit area of powder material 4 used in rolled sheet 5 is small, it is possible to form a powder layer for a large-format and high-capacity energy device that has a high capacity and excellent quality.

Also, rolled sheet 5 can be used in, for example, a positive electrode, a negative electrode, or the like in an energy device such as a lithium ion secondary battery.

In the case where rolled sheet 5 is used in the positive electrode, for example, rolled sheet 5 that contains powder material 4 is used as a positive electrode mixture layer. That is, the positive electrode mixture layer is used in combination with a positive electrode current collector. Powder material 4 contained in the positive electrode mixture layer contains a positive electrode active material as at least one particle material. In the case where rolled sheet 5 is used in the negative electrode, for example, rolled sheet 5 that contains powder material 4 is used as a negative electrode mixture layer. That is, the negative electrode mixture layer is used in combination with a negative electrode current collector. Powder material 4 contained in the negative electrode mixture layer contains a negative electrode active material as at least one particle material.

The concentration of solvent contained in each of the positive electrode mixture layer and the negative electrode mixture layer is 50 ppm or less. That is, the positive electrode mixture layer and the negative electrode mixture layer are substantially free of solvent. As used herein, the expression "substantially free of solvent" encompasses the case where these layers contain no solvent, and the case where these layers unavoidably contain a solvent as an impurity or the like at a concentration of 50 ppm or less.

As the solvent, for example, an organic solvent is used. Also, there is no particular limitation on the method for measuring the solvent. The measurement can be performed using, for example, gas chromatography, a mass variation method, or the like. Examples of the organic solvent include: nonpolar organic solvents such as heptane, xylene, and toluene; polar organic solvents such as a tertiary amine solvent, an ether solvent, a thiol solvent, and an ester solvent; and any combinations thereof. Examples of the tertiary amine solvent include triethylamine, tributylamine, and triamylamine. Examples of the ether solvent include tetrahydrofuran and cyclopentyl methyl ether. Examples of the thiol solvent include ethane mercaptan. Examples of the ester solvent include butyl butyrate, ethyl acetate, and butyl acetate.

Next, the material used for the positive electrode mixture layer and the negative electrode mixture layer will be described in detail.

The positive electrode active material is a substance where metal ions such as lithium (Li) ions are intercalated into or deintercalated out of a crystal structure at a potential higher than that of the negative electrode, and oxidation or reduction takes place along with the intercalation or deintercalation of metal ions such as lithium ions. The type of positive electrode active material is selected as appropriate. For example, an oxide active material may be used.

As the positive electrode active material used in the present embodiment, for example, lithium transition metal oxide particles that contain a transition metal element such as Co, Mn, or Ni can be used. Examples of the lithium transition metal oxide particles include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F, where M represents at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3. These may be used alone or as a mixture of two or more. From the viewpoint of achieving a high-capacity lithium ion secondary battery, the positive electrode active material particles preferably contain lithium nickel composite oxide particles such as LiₓNiO₂, LiₓCo_{y}Ni_{1-y}O₂, LiₓNi_{1-y}M_{y}O_{z}, where M represents at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3.

The shape of the positive electrode active material may be, for example, a particulate shape or the like. In the case where the positive electrode active material has a particulate shape, the particle size of the positive electrode active material may be, for example, within a range of 0.05 µm or more and 30 µm or less, or within a range of 1 µm or more and 15 µm or less. When the particle size of the positive electrode active material is set to 0.05 µm or more, ease of handling is likely to be improved. On the other hand, when the particle size is set to 30 µm or less, the active material has a small particle size, which increases the surface area, and thus a high-capacity positive electrode is likely to be obtained. In the specification of the present application, the particle size of the material contained in the positive electrode mixture layer or the negative electrode mixture layer is, for example, D50 described above.

The negative electrode active material is a substance where metal ions such as lithium ions are intercalated into or deintercalated out of a crystal structure at a potential lower than that of the positive electrode, and oxidation or reduction takes place along with the intercalation or deintercalation of metal ions such as lithium ions.

As the negative electrode active material used in the present embodiment, for example, metal lithium, a lithium alloy such as a lithium-aluminum alloy, a lithium-lead alloy, a lithium-silicon alloy, or a lithium-tin alloy, a carbon material such as graphite, coke, or a sintered organic substance, a metal oxide such as SnO₂, SnO, or TiO₂, or the like can be used. These may be used alone or in a combination of two or more. Also, as the negative electrode active material, it is also possible to use a composite or the like obtained by mixing those listed above as examples of the negative electrode active material as appropriate.

The particle size of the negative electrode active material is, for example, 30 µm or less. By using the active material that has a small particle size, the surface area is increased, and thus a high-capacity negative electrode can be obtained.

Next, the positive electrode current collector and the negative electrode current collector will be described in detail.

The positive electrode used in the present embodiment includes the positive electrode current collector that is made of, for example, a metal foil or the like. As the positive electrode current collector, for example, a foil-like body, a plate-like body, a mesh-like body, or the like that is made of aluminum, gold, platinum, zinc, copper, stainless steel (SUS), nickel, tin, titanium, or an alloy of two or more thereof is used. The thickness, the shape, and the like of the positive electrode current collector may be selected as appropriate according to the application of the positive electrode.

The negative electrode used in the present embodiment includes the negative electrode current collector that is made of, for example, a metal foil or the like. As the negative electrode current collector, for example, a foil-like body, a plate-like body, a mesh-like body, or the like that is made of stainless steel, gold, platinum, zinc, copper, nickel, titanium, tin, or an alloy of two or more thereof is used. The thickness, the shape, and the like of the negative electrode current collector may be selected as appropriate according to the application of the negative electrode.

### (Advantageous Effects)

Hereinafter, advantageous effects of the powder rolling unit according to the present embodiment will be described.

As described above, a powder rolling unit according to technique 1 of the present embodiment includes: rolling roll 2a and/or 2b that form rolled sheet 5 by rolling powder material 4; hopper 1 that stores powder material 4 above rolling roll 2a and/or 2b, and; squeegee 3 that is provided above rolling roll 2a and/or 2b and parallel to an axis direction of rolling roll 2a and/or 2b, and is vibrated at a predetermined frequency. The following expression is satisfied: 22 ≤ (distance L1a or L1b between squeegee 3 and rolling roll 2a or 2b) / a particle size (D50) ≤ 58, when the distance between squeegee 3 and rolling roll 2a or 2b is divided by the particle size (D50) of a powder that is included in powder material 4 to be rolled.

With this configuration, squeegee 3 can apply vibration to powder material 4 that is stored in hopper 1. This enables powder material 4 to be constantly supplied (in a uniform amount of powder) to rolling roll 2a and/or 2b such that powder material 4 does not clog at rolling roll 2a and/or 2b. It is thereby possible to improve the fluidity of powder material 4 near the nip region in hopper 1.

Also, by satisfying the expression: 22 ≤ distance L1a or L1b / particle size (D50) ≤ 58, the occurrence of electrode mixture loss can be prevented, the occurrence of bridging in hopper 1 can be prevented, and it can be expected that the variation in the mass per unit area of rolled sheet 5 can be reduced.

Accordingly, according to the present embodiment, clogging caused by powder material 4 in the nip region can be reduced, and the variation in the mass per unit area of rolled sheet 5 can be reduced. As a result, it is possible to obtain rolled sheet 5 that has a uniform mass per unit area. In particular, according to the present embodiment, intended rolled sheet 5 can be obtained, and thus the reduction in yield can be suppressed.

Also, a powder rolling unit according to technique 2 of the present embodiment is the powder rolling unit according to technique 1, wherein a pair of rolling rolls 2a and 2b are provided. The pair of rolling rolls 2a and 2b form rolled sheet 5 by rolling powder material 4.

With this configuration, because squeegee 3 is provided parallel to rolling rolls 2a and 2b, the distance from one end portion of squeegee 3 to the compression point is equal to the distance from another end portion of squeegee 3 to the compression point, which makes it difficult for a difference caused by variation between the mass per unit area of rolled sheet 5 obtained in one end portion of rolled sheet 5 and the mass per unit area of rolled sheet 5 obtained in another end portion of rolled sheet 5 to occur.

Also, a powder rolling unit according to technique 3 of the present embodiment is the powder rolling unit according to technique 2, wherein rolling roll 2a that is one of the pair of rolling rolls 2a and 2b has a surface roughness greater than a surface roughness of rolling roll 2b that is an other one of the pair of rolling rolls 2a and 2b.

With this configuration, rolled sheet 5 is easily discharged from the space between rolling rolls 2a and 2b, with rolled sheet 5 sticking to the surface of rolling roll 2a. It is thereby possible to convey rolled sheet 5 that has passed through the space between rolling rolls 2a and 2b to the next rolls.

Also, a powder rolling unit according to technique 4 of the present embodiment is the powder rolling unit according to any one of techniques 1 to 3, wherein rolling roll 2a that is one of the pair of rolling rolls 2a and 2b has a rotation speed higher than a rotation speed of rolling roll 2b that is an other one of the pair of rolling rolls 2a and 2b.

With this configuration, rolled sheet 5 is easily discharged from the space between rolling rolls 2a and 2b, with rolled sheet 5 sticking to the surface of rolling roll 2a. Accordingly, rolling rolls 2a and 2b can convey rolled sheet 5 that has passed through the space between rolling rolls 2a and 2b to the next rolls.

Also, a powder rolling unit according to technique 5 of the present embodiment is the powder rolling unit according to any one of techniques 2 to 4, wherein at least a portion of squeegee 3 is provided between the pair of rolling rolls 2a and 2b so as not to come into contact with the pair of rolling rolls 2a and 2b.

With this configuration, squeegee 3 can apply vibration to powder material 4 when powder material 4 stored in hopper 1 is supplied to the nip region between rolling rolls 2a and 2b. Due to the vibration of squeegee 3, the fluidity of powder material 4 is improved, and it is therefore possible to obtain rolled sheet 5 that has a small variation in the mass per unit area.

Also, a powder rolling unit according to technique 6 of the present embodiment is the powder rolling unit according to any one of techniques 1 to 5, wherein the predetermined frequency at which squeegee 3 is vibrated is 2 kHz or more and 300 kHz or less.

For example, if squeegee 3 is vibrated at a low frequency of 2 kHz or less, insufficient vibration frequency is applied to the powder, and sufficient fluidity may not be imparted to the powder. If, conversely, squeegee 3 is vibrated at a high frequency of 300 kHz or more, vibration attenuation when vibration is transmitted to the powder increases, and it may not be possible to impart sufficient fluidity to the powder.

However, according to the present embodiment, in the case where a powder that has a particle size of 100 µm or more and 700 µm or less is used, fluidity can be imparted to the powder. Accordingly, due to the vibration of squeegee 3, the fluidity of powder material 4 is improved, and it is therefore possible to obtain rolled sheet 5 that has a small variation in the mass per unit area.

### (Other Embodiments)

Up to here, the powder rolling unit according to the present disclosure has been described based on the embodiment. However, the present disclosure is not limited to the embodiment given above.

For example, in the powder rolling unit according to the present embodiment, the number of squeegees 3 is not limited to one. That is, the powder rolling unit may further include a multi-stage squeegee. Specifically, the multi-stage squeegee may be provided in hopper 1 such that the axis direction of the multi-stage squeegee is parallel to the axis direction of rolling rolls 2a and 2b. The multi-stage squeegee can gently pulverize powder material 4 beforehand between squeegee 3 and rolling rolls 2a and 2b such that powder material 4 does not clog. Also, a plurality of multi-stage squeegees may be provided above squeegee 3. For example, a multi-stage squeegee may be provided above between squeegee 3 and rolling roll 2a, and another multi-stage squeegee may be provided above between squeegee 3 and rolling roll 2b.

Other embodiments obtained by making various modifications that can be conceived by a person having ordinary skill in the art to the above embodiments as well as embodiments constructed by combining some of the structural elements of the above embodiments without departing from the scope of the present disclosure are also included within the scope of the present disclosure.

### [Industrial Applicability]

The powder rolling unit according to the present disclosure can form a uniform powder layer without using a solvent, and is therefore applicable to applications such as an electrode mixture layer in a high-quality lithium ion secondary battery, and the like.

### [Reference Signs List]

- 1: hopper
- 2a, 2b: rolling roll
- 3: squeegee
- 4: powder material
- 5: rolled sheet
- 6: vibrator

## Claims

1. A powder rolling unit comprising:
a rolling roll that forms a rolled sheet by rolling a powder material;
a hopper that stores the powder material above the rolling roll; and
a squeegee that is provided above the rolling roll and parallel to an axis direction of the rolling roll, and is vibrated at a predetermined frequency,
wherein the following expression is satisfied:
22 ≤ (a distance between the squeegee and the rolling roll) / a particle size (D50) ≤ 58, when the distance between the squeegee and the rolling roll is divided by the particle size (D50) of a powder that is included in the powder material to be rolled.

2. The powder rolling unit according to claim 1,
wherein the rolling roll includes a pair of rolling rolls, and
the pair of rolling rolls form the rolled sheet by rolling the powder material.

3. The powder rolling unit according to claim 2,
wherein one of the pair of rolling rolls has a surface roughness greater than a surface roughness of an other one of the pair of rolling rolls.

4. The powder rolling unit according to claim 3,
wherein one of the pair of rolling rolls has a rotation speed higher than a rotation speed of an other of the pair of rolling rolls.

5. The powder rolling unit according to any one of claims 2 to 4,
wherein at least a portion of the squeegee is provided between the pair of rolling rolls so as not to come into contact with the pair of rolling rolls.
